# EUROPEAN PATENT APPLICATION

(11) **EP 4 011 790 A1**
(43) Date of publication of application: **15.06.2022**
(21) Application number: 20851571.8
(22) Date of filing: 07.08.2020
(51) Int. Cl.: B65B 39/00, B65B 3/12, B65B 37/06, B67C 3/02

(54) **FILLING NOZZLE OF LIQUID FILLING DEVICE**

(30) Priority: 09.08.2019 JP 2019146992
(71) Applicant: Shikoku Kakoki Co., Ltd., Itano-gun, Tokushima 771-0287 (JP)
(72) Inventor: KONDO, Masakatsu, Tokushima 771-0287 (JP); TAKECHI, Yasuhiro, Tokushima 771-0287 (JP); KAWANO, Koyuki, Tokushima 771-0287 (JP)
(74) Representative: Staeger & Sperling Partnerschaftsgesellschaft mbB
(86) International application number: PCT/JP2020/030393
(87) International publication number: WO 2021/029365

(57) **Abstract**

[Object]

Provided is a filling nozzle of a liquid filling device capable of discharging a variety of liquids from low-viscosity liquids to high-viscosity liquids and liquids contained solids, and which does not cause dripping or dropping of the contained solids after the completion of liquid filling, thereby suppressing splashing and foaming in a container.

[Solving Means]

A filling nozzle 3 has a substantially vertical cylindrical nozzle body 4 and a substantially vertical rod-shaped spool 5 inserted so as to be freely slidable upward and downward into the nozzle body 4. The spool 5 includes a liquid inlet port 51 and a liquid discharge port 52 on an outer peripheral surface of the spool 5, and a liquid distribution channel 53 configured to communicate these ports is formed in the spool 5. The nozzle body 4 includes a liquid introduction hole 41 therethrough. The spool 5 is moved downward during liquid filling to a position in which the liquid inlet port 51 communicates with the liquid introduction hole 41 of the nozzle body 4, and the liquid discharge port 52 is exposed downward from the nozzle body 4 and opened and is moved upward at the time of completion of liquid filling to a position in which the liquid discharge port 52 is blocked by an inner peripheral surface of the nozzle body 4.

## Description

### Technical Field

The present invention relates to a liquid filling device used for filling a container with a fixed quantity of liquid and, more specifically, to a filling nozzle for discharging liquid into the container in the liquid filling device.

### Background Art

For example, a liquid filling device for filling various liquids such as beverages and desserts with a fixed quantity into various containers such as paper roof-shaped containers, brick-shaped containers, and plastic cups and bottles includes a filling nozzle at a lower part of the device and is configured to discharge the liquid from the filling nozzle into the container in fixed quantities.

As such a filling nozzle, Patent Literature 1 listed below discloses a configuration including a vertical cylindrical nozzle body and a perforated plate; one at a lower end of the nozzle body or plural at the upper and lower ends of the nozzle body.

Patent Literature 2 listed below discloses a filling nozzle including a substantially vertical bottomed cylindrical nozzle body having a discharge hole at a bottom wall portion and a valve member configured to be moved up and down within the nozzle body so as to come into and out of contact with an upper end edge of the discharging hole to open and close the discharging hole.

Patent Literature 3 listed below discloses a filling nozzle including a substantially vertical cylindrical nozzle body having a tapered discharging port at a lower end, a valve support rod configured to be moved up and down in the nozzle body, and a closing valve connected to a lower end of the valve support rod and configured to come into and out of contact with a lower end edge of the discharge port to open and close the discharge port.

Patent Literature 4 listed below discloses a filling nozzle including a vertical cylindrical nozzle body having a discharge port at a lower end and a liquid inlet port at a peripheral wall part, and a spool inserted into the nozzle body to be freely slidable upward and downward to open and close the liquid inlet port.

### Citation List

### Patent Literature

PTL 1: JP-UM-A-4-97010
PTL 2: JP-A-2004-83043
PTL 3: Microfilm disclosed in Japanese Utility Model Application No.59-5658 (Japanese Unexamined Utility Model Application Publication No.60-118601).
PTL 4: Microfilm disclosed in Japanese Utility Model Application No.63-56340 (Japanese Unexamined Utility Model Application Publication No.1-158401).

### Summary of Invention

### Solution to Problem

In the case of the filling nozzle described in PTL 1 above, a rectifying action of the perforated plate prevents the discharged liquid from splashing or foaming in the container. However, if the liquid to be filled is a high-viscosity liquid or liquid contained solids such as pulp, the porous plate becomes clogged, and thus the filling nozzle cannot be used for filling such types of liquid.

In the case of the filling nozzle described in PTL 2 above, an upper end side of the discharge hole is opened and closed by the valve member, so that a lower end side is always open and the liquid does not fall out only by a surface tension after the completion of liquid filling. Therefore, if the surface tension of the liquid is disrupted by mechanical vibrations or the like, dripping may occur or solids such as pulp adhered to the lower end edge of the discharge hole may fall. Moreover, this filling nozzle cannot be used for filling the liquid containing solids such as a relatively large-sized pulp, for example, because the diameter of the discharge hole is small due to the necessity of preventing liquid dripping by the surface tension as described above.

In the case of the filling nozzle described in PTL 3 above, when it is applied to filling of the liquid containing solids such as pulp, the contained solids tend to be caught between the discharge port and the closing valve after the completion of liquid filling, thereby causing the dripping and the dropping of contained solids. To prevent splashing and foaming of the liquid discharged into the container, it is preferable to make a liquid discharge position as low as possible. In the case of the filling nozzle described in PTL3 above, it is necessary to increase an up-down stroke of the closing valve to lower the discharge position, which, however, increases an opening area of the discharge port, and thus may result in easy entry of air into the filling nozzle and less cohesion of liquid to be discharged, so that probability of occurrence of splashing and foaming of the liquid may increase.

In the case of the filling nozzle described in PTL 4 above, since a direction of liquid discharged from the discharge port is directly downward, the liquid strikes the bottom of the container directly, which increases the splash of the liquid, thereby resulting in a high probability of occurrence of adherence of the liquid to a top seal surface of the container due to splashing, jumping out of the liquid from the container, and foaming. In addition, liquid and contained solids adhere to a lower end surface of the spool during liquid filling, but the spool moves upward in that state to complete filling. Therefore, dripping from the lower end surface of the spool and falling of contained solids may occur.

In order to solve the above-described problems, it is an object of the present invention to provide a filling nozzle of a liquid filling device capable of discharging a variety of liquids from a low-viscosity liquid to a high-viscosity liquid and a liquid contained solids such as pulp and fibers without hindrance, preventing dripping or falling of the contained solids after the completion of liquid filling, and effectively suppressing splashing and foaming of the discharged liquid in a container.

### Solution to Problem

To achieve the above-described object, the present invention includes the following modes.

In identifying the invention, "liquid" shall include liquids having various viscosities ranging from low viscosity to high viscosity, as well as liquids contained solids, such as fruit pulp and fibers, for example.

1) A filling nozzle of a liquid filling device including:
   a substantially vertical cylindrical nozzle body provided at a lower part of the liquid filling device with a lower end facing an opening of a container; and a substantially vertical rod-shaped spool inserted into the nozzle body so as to be freely slidable upward and downward,
   the spool including a liquid inlet port and a liquid discharge port on an outer peripheral surface, the liquid discharge port formed at a position lower than the liquid inlet port, the spool including, in an interior thereof, a liquid distribution channel that communicates the liquid inlet port and the liquid discharge port,
   the nozzle body including a liquid introduction hole formed through a predetermined height position to introduce liquid under a predetermined filling pressure, and
   the spool being moved downward during liquid filling to a position in which the liquid inlet port communicates with the liquid introduction hole of the nozzle body, and the liquid discharge port being exposed downward from the nozzle body and opened, and being moved upward at the time of completion of liquid filling to a position in which the liquid discharge port is blocked by an inner peripheral surface of the nozzle body.
2) The filling nozzle of the liquid filling device as above-described in 1) wherein when the spool is moved upward at the time of completion of liquid filling, the liquid introduction hole of the nozzle body is blocked by a portion of the outer peripheral surface of the spool between the liquid inlet port and the liquid discharge port and then the liquid discharge port is blocked by the inner peripheral surface of the nozzle body.
3) The filling nozzle of the liquid filling device as above-described in 1) or 2), wherein when the spool is moved downward at the time of the start of liquid filling, at least part of the liquid discharge port of the spool is exposed downward from the nozzle body and opened, and then the liquid inlet port of the spool and the liquid introduction hole of the nozzle body are brought into communication.
4) The filling nozzle of the liquid filling device as above-described in 3), wherein when the spool is moved downward at the time of the start of liquid filling, at least 5% of an opening area of the liquid discharge port of the spool is exposed downward from the nozzle body and opened, and then the liquid inlet port of the spool and the liquid introduction hole of the nozzle body are brought into communication.
5) The filling nozzle of the liquid filling device as above-described in 1), wherein when the spool is moved downward at the time of the start of liquid filling, the liquid inlet port of the spool and the liquid introduction hole of the nozzle body start to communicate simultaneously with the start of opening of the liquid discharge port of the spool, and
   when the spool is moved upward at the time of completion of liquid filling, the liquid introduction hole of the nozzle body is blocked by a portion of the outer peripheral surface of the spool between the liquid inlet port and the liquid discharge port and, at the same time, the liquid discharge port is blocked by the inner peripheral surface of the nozzle body.
6) The filling nozzle of the liquid filling device as above-described in 1), wherein the liquid inlet port of the spool and the liquid introduction hole of the nozzle body are formed to communicate with each other in a constant area irrespective of the position of the spool in the up-down stroke,
   when the spool is moved downward at the time of the start of liquid filling, the liquid discharge port of the spool starts to open at the same time with the introduction of liquid under a predetermined filling pressure into a liquid distribution channel through the liquid inlet port and the liquid introduction hole starts, and
   when the spool is moved upward at the time of completion of liquid filling, the liquid discharge port is blocked by the inner peripheral surface of the nozzle body simultaneously with the termination of the introduction of the liquid into the liquid distribution channel.
7) The filling nozzle of the liquid filling device as above-described in any one of 1) to 6), wherein the liquid distribution channel of the spool has an inclined part extending obliquely downward toward the liquid discharge port.
8) The filling nozzle of the liquid filling device as above-described in any one of 1) to 7), wherein four or two liquid discharge ports for discharging liquid obliquely when viewed from a plane toward inner surfaces of the four sidewalls or inner surfaces of two opposing sidewalls of a container having a square cross-sectional surface are formed equidistantly in the circumferential direction on an outer peripheral surface of the spool.
9) The filling nozzle of the liquid filling device as above-described in any one of 1) to 7), wherein three liquid discharge ports for discharging liquid toward the inner surface of the peripheral wall of the container having a circular cross-sectional surface are formed equidistantly in the circumferential direction on the outer peripheral surface of the spool to discharge liquid.
10) The filling nozzle of the liquid filling device as above-described in any one of 1) to 9), wherein the spool is moved downward to a position at which at least part of the liquid discharge port exposed downward from the nozzle body and opened enters the container during liquid filling.
11) The filling nozzle of the liquid filling device as above-described in any one of 1) to 10), wherein the liquid discharge port of the spool has a shape such that the horizontal width of the lower part thereof gradually decreases downwardly.
12) The filling nozzle of the liquid filling device as above-described in any one of 1) to 11), wherein the lower end surface of the spool is recessed upwardly.
13) The filling nozzle of the liquid filling device as above-described in any one of 1) to 12), wherein the lower end of the spool has a downwardly protruding part extending downwardly from around an outer peripheral surface part located below the liquid discharge port.
14) The filling nozzle of the liquid filling device as above-described in any one of 1) to 13), wherein the lower end of the nozzle body has a downwardly protruding part extending downwardly from around an outer peripheral surface part corresponding to the liquid discharge port of the spool.

### Advantageous Effect of the Invention

According to the filling nozzle of the liquid filling device as described in 1) above, the liquid is discharged from the liquid discharge port on the outer peripheral surface of the spool which is opened downward from the nozzle body through the liquid introduction hole of the nozzle body and the liquid inlet port and liquid distribution channel of the spool. Therefore, even high-viscosity liquid and liquids contained solids such as pulp and fibers can be discharged without hindrances such as clogging or other problems.

According to the filling nozzle, the spool moves upward at the time of completion of liquid filling, and the liquid discharge port is blocked by the inner peripheral surface of the nozzle body so that no dripping or falling of contained solids occurs.

Furthermore, with the same filling nozzle, even if the up-down stroke of the spool is increased to lower the discharge position, the opening area of the liquid discharge port is always constant and the liquid is discharged from the liquid discharge port formed on the outer peripheral surface of the spool, thereby suppressing an occurrence of splashing or foaming of the discharged liquid in the container.

According to the filling nozzle of the liquid filling device as described in 2) above, the liquid introduction hole of the nozzle body is blocked by a portion of the outer peripheral surface of the spool between the liquid inlet port and the liquid discharge port, and the liquid discharge port of the spool is blocked by the inner peripheral surface of the nozzle body when no pressure is applied to the inside of the spool. Therefore, there is no risk of the liquid being ejected from the liquid discharge port vigorously when the spool is moved upward and adhering to the opening of the container or the like.

According to the filling nozzle of the liquid filling device as described in 3) or 4) above, the liquid inlet port of the spool and the liquid introduction hole of the nozzle body are not brought into communication until at least part of the liquid discharge port of the spool is exposed downward from the nozzle body and opened, and no pressure is present in the spool. Therefore, there is no risk of the liquid being ejected from the liquid discharge port vigorously when the spool is moved downward and adhering to the opening of the container or the like. In particular, like the filling nozzle of the liquid filling device as described in 4) above, with the configuration such that the liquid inlet port of the spool and the liquid introduction hole of the nozzle body are not brought into communication until at least 5% of an opening area of the liquid discharge port of the spool is exposed downward from the nozzle body and opened, achievement of the effects described above is further ensured.

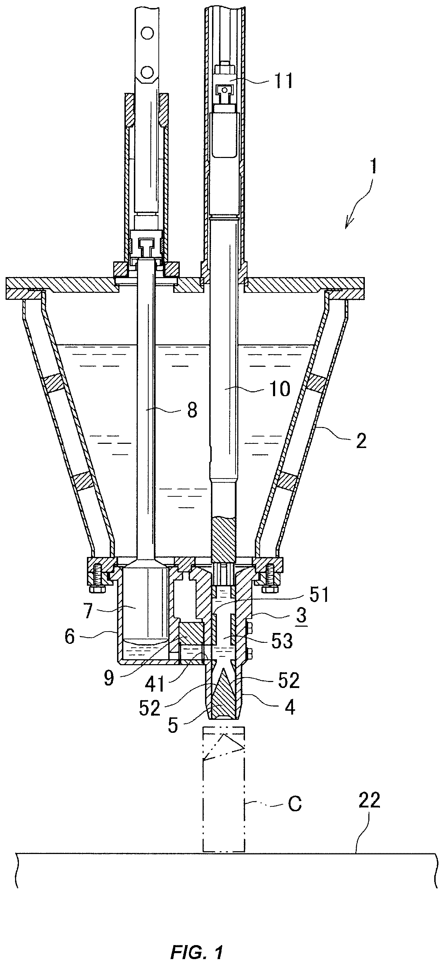

According to the filling nozzle of the liquid filling device as described in 5) above, for example, when the liquid filling device has a liquid distribution port formed on the outer peripheral surface of the spool to bring the liquid distribution channel into communication with a liquid tank located above the nozzle body when the spool is at an upper end position of the up-down stroke, as well as the liquid introduction hole of the nozzle body is in communication with an inside of the metering cylinder in which a piston is slidably inserted (see Fig. 1 to Fig. 5, etc., in conjunction with the first embodiment described below), the following problems can be solved. In other words, with the configuration in which when the spool is moved downward at the time of the start of liquid filling, the liquid inlet port of the spool and the liquid introduction hole of the nozzle body are brought into communication to allow the introduction of the liquid into the liquid distribution channel in the spool after the opening of the liquid discharge port of the spool has started, air may enter the liquid distribution channel from the liquid discharge port and accumulate in an upper part of the liquid distribution channel in the meantime. Likewise, with the configuration in which when the spool is moved upward at the time of completion of liquid filling, the liquid introduction hole of the nozzle body is blocked by a portion of the outer peripheral surface of the spool between the liquid inlet port and the liquid discharge port and then the liquid discharge port is blocked by the inner peripheral surface of the nozzle body, air may enter the liquid distribution channel from the liquid discharge port and accumulate in an upper part of the liquid distribution channel in the meantime. Such air retention is considered to be particularly likely to occur when the liquid to be filled into the container is of low viscosity and the quantity of liquid filled into the container is relatively small. The air staying in the upper part of the liquid distribution channel is, for example, fed into the metering cylinder for liquid filling together with the liquid introduced from the liquid tank in communication with the liquid distribution channel and stays, thereby possibly impairing a liquid filling function of the metering cylinder.

Therefore, like the filling nozzle as described in 5) above, by matching the timing at which opening of the liquid discharge port of the spool is started with the timing at which the liquid inlet port of the spool starts to be brought into communication with the liquid introduction hole of the nozzle body when filling liquid, and matching the timing at which the liquid introduction hole of the nozzle body is blocked with the timing at which the liquid discharge port of the spool is plugged when completing the liquid filling, the air is avoided from entering the liquid distribution channel of the spool and staying in the upper part thereof, so that the liquid filling device can be operated continuously without hindrance.

According to the filling nozzle of the liquid filling device as described in 6) above, by matching the timing at which the introduction of liquid into the liquid distribution channel of the spool is started with the timing at which opening of the liquid discharge port of the spool is started when filling liquid, and matching the timing at which introduction of liquid into the liquid distribution channel is terminated with the timing at which the liquid discharge port of the spool is blocked when completing the liquid filling, the air is avoided from entering the liquid distribution channel of the spool in the same manner as the filling nozzle as described in 5) above, and accumulating in the upper part thereof, so that the liquid filling device can be operated continuously without hindrance.

Also, according to the filling nozzle as described in 6) above, the area of the communication between the liquid inlet port of the spool and the liquid introduction hole of the nozzle body can be made constant regardless of the position of the up-down stroke of the spool, so that the flow of the liquid introduced into the liquid distribution channel of the spool becomes constant, which facilitates adjustment during liquid filling.

According to the filling nozzle of the liquid filling device as described in 7) above, the liquid guided to the liquid discharge port by an inclined part of the liquid distribution channel of the spool is discharged obliquely downward from the liquid discharge port, flows down along the inner peripheral surface of the container, and then strikes the bottom of the container, so that the impact of the strike is reduced and an occurrence of splashing or foaming is suppressed.

According to the filling nozzle of the liquid filling device as described in 8) above, the liquid discharged from the four or two liquid discharge ports of the spool toward the inner surfaces of the sidewalls of the container having a square cross-sectional surface is avoided from colliding near the bottom of the container, so that splashing and foaming are effectively suppressed.

According to the filling nozzle of the liquid filling device as described in 9) above, the liquid discharged from the three liquid discharge ports of the spool toward the inner surfaces of the peripheral wall of the container having a circular cross-sectional surface is avoided from colliding near the bottom of the container, so that splashing and foaming are effectively suppressed.

According to the filling nozzle of the liquid filling device as described in 10) above, the liquid is discharged with at least part of the liquid discharge port of the spool entered the container, thereby preventing the liquid from adhering to a top seal surface of, for example, a paper roof-shaped container, and thus preventing the occurrence of a top seal failure.

Also, according to the same filling nozzle, since the discharge of liquid is started when a length between the liquid discharge port of the spool and the bottom of the container is shortened, the impact of the discharged liquid when it strikes the bottom of the container is reduced and an occurrence of splashing or foaming is suppressed.

According to the filling nozzle of the liquid filling device as described in 11) above, when the liquid to be filled contains solids such as pulp and fibers, when the spool is moved upward at the time of completion of liquid filling, the solids gather at the lower end of the liquid discharge port of the spool and can be drained easily, thereby preventing the solids from being caught between the nozzle body and the spool.

According to the filling nozzle of the liquid filling device as described in 12) above, the discharged liquid and the contained solids can hardly adhere to and stay on the lower end surface of the spool, and thereby suppressing dripping of the liquid and falling of the contained solids effectively.

According to the filling nozzle of the liquid filling device as described in 13) or 14) above, even when filling the container with a high-viscosity liquid, the liquid discharged from the liquid discharge port of the spool and adhering to the lower end part of the outer peripheral surface of the spool can easily gather at a distal end portion of the downwardly protruding part formed at the lower end of the spool and/or at the lower end of the nozzle body. Therefore, when the spool moves upward and is housed in the nozzle body at the time of completion of liquid filling, the liquid adhering to the outer peripheral surface of the spool is almost completely drained, thereby suppressing dripping effectively.

### Brief Description of Drawings

[Fig. 1] Fig. 1 is a vertical cross-sectional view schematically illustrating an entire part of a liquid filling device of a first embodiment of the present invention.
[Fig. 2] Fig. 2 is an enlarged vertical cross-sectional view of a filling nozzle of the liquid filling device, showing the state before liquid filling.
[Fig. 3] Fig. 3 is an enlarged vertical cross-sectional view of the filling nozzle of the liquid filling device, showing the state during liquid filling.
[Fig. 4] Fig. 4 is a perspective view of a spool used in the filling nozzle.
[Fig. 5] Fig. 5 is a vertical cross-sectional view of a liquid filling process using the filling nozzle in sequence.
[Fig. 6] Fig. 6 illustrates a first modification of the liquid filling device and is a vertical cross-sectional view (equivalent to Fig. 5) showing the liquid filling process using the filling nozzle in sequence.
[Fig. 7] Fig. 7 illustrates a second modification of the liquid filling device, which is an enlarged vertical cross-sectional view (equivalent to Fig. 2), showing a state of the filling nozzle before liquid filling.
[Fig. 8] Fig. 8 illustrates the second modification of the liquid filling device, which is an enlarged vertical cross-sectional view (equivalent to Fig. 3), showing the state of the filling nozzle during liquid filling.
[Fig. 9] Fig. 9 illustrates a spool used in the filling nozzle used in a second modification of the liquid filling device in which (a) is a side view, (b) is a vertical cross-sectional view taken along a line b-b of (a), (c) is a horizontal cross-sectional view taken along the line c-c of (b), (d) is a horizontal cross-sectional view taken along the line d-d of (b), and (e) is a horizontal cross-sectional view taken along the line e-e of (b).
[Fig. 10] Fig. 10 is a vertical cross-sectional view (equivalent to Fig. 5) showing the liquid filling process in sequence using the filling nozzle of the second modification of the liquid filling device.
[Fig. 11] Fig. 11 is a vertical cross-sectional view schematically illustrating an entire part of a liquid filling device of a second embodiment of the present invention.
[Fig. 12] Fig. 12 is an enlarged vertical cross-sectional view of the filling nozzle of the liquid filling device, showing the state before liquid filling.
[Fig. 13] Fig. 13 is an enlarged vertical cross-sectional view of the filling nozzle of the liquid filling device, showing the state during liquid filling.
[Fig. 14] Fig. 14 is a perspective view of the spool used in the filling nozzle.
[Fig. 15] Fig. 15 is a vertical cross-sectional view showing the liquid filling process using the filling nozzle in sequence.
[Fig. 16] Fig. 16 illustrates a modification of the liquid filling device and is a vertical cross-sectional view (equivalent to Fig. 15) showing the liquid filling process using the filling nozzle in sequence.
[Fig. 17] Fig. 17 illustrates the filling nozzle in a mode of a direction of liquid discharged from the four liquid discharge ports of the spool against the inner surface of the side wall of a container having a square cross-sectional surface, in which(a) is a side view of the spool, and (b-1) through (b-3) are plan views of the spool and container in the filling nozzle.
[Fig. 18] Fig. 18 illustrates the filling nozzle in a mode of the direction of liquid discharged from the two liquid discharge ports of the spool against the inner surface of the side wall of a container having a square cross-sectional surface, in which(a) is a side view of the spool, and (b-1) through (b-3) are plan views of the spool and container in the filling nozzle.
[Fig. 19] Fig. 19 illustrates a modification of the filling nozzle in which (a) is a perspective view of the spool, and (b) is a perspective view of the nozzle body.
[Fig. 20] Fig. 20 illustrates another modification of the filling nozzle, in which(a) is a perspective view of a spool, and(b) is a perspective view of a nozzle body. Description of Embodiments

Embodiments of the present invention will be described below with reference to the drawings.

### First Embodiment

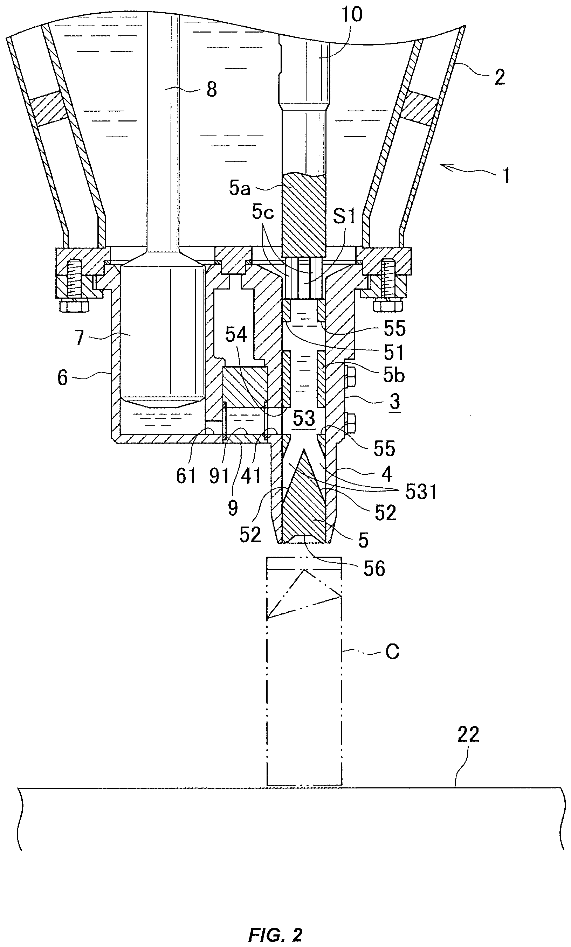

Fig. 1 schematically illustrates an entire part of a liquid filling device according to a first embodiment of the present invention, and Fig. 2 to Fig. 5 illustrate details of a filling nozzle of the device.

In the following description, the left in Fig. 1 to Fig. 3 is referred to as "front", and the right in the same drawings is referred to as "rear".

As illustrated in Fig. 1, a liquid filling device (1) of this embodiment has a liquid tank (2), a filling nozzle (3) provided below a bottom of the liquid tank (2) in communication with an inside of the liquid tank (2), and a metering cylinder (6) provided below the bottom of the liquid tank (2) adjacent to the filling nozzle (3) in the front-rear direction and in communication with the filling nozzle (3).

Liquid is supplied to the liquid tank (2) by a liquid supply tube, which is not illustrated in the drawing, and is temporarily stored in the tank.

The filling nozzle (3) has a substantially vertical cylindrical nozzle body (4) disposed so that a lower end faces an upper end opening of a container (C), and a substantially vertical rod-shaped spool (5), which is inserted into the nozzle body (4) so as to be freely slidable upward and downward. The container (C) is transported by means of a conveyor (22) or the like, for example, to a filling station located directly below the filling nozzle (3), is filled with liquid here, and then the liquid is transported to the next station.

A piston (7) is inserted into the metering cylinder (6) so as to be freely slidable upward and downward. The piston (7) is configured to be moved reciprocally upward and downward in the metering cylinder (6) by moving a vertical up-down rod (8), which is connected to the upper end thereof and protruding upward through a head part of the liquid tank (2), upward and downward by a drive means such as a servomotor (not illustrated) and the like. The metering cylinder (6) includes a liquid distribution hole (61) formed through in the lower part of the peripheral wall part thereof on the filling nozzle (3) side portion, that is, through the rear side portion.

The nozzle body (4) of the filling nozzle (3) is provided in a drooping manner at the bottom of the liquid tank (2) so that the lower end thereof faces the upper end opening of the container (C). The upper end opening of the nozzle body (4) is in communication with the inside of the liquid tank (2). The inner peripheral surface of the nozzle body (4) is made to be a vertical cylindrical shape having a circular cross-sectional surface. The nozzle body (4) includes a liquid introduction hole (41) formed through the peripheral wall part thereof at the metering cylinder (6) side portion, that is, at a predetermined height position on the front side. The liquid introduction hole (41) is in communication with the liquid distribution hole (61) of the metering cylinder (6) via a horizontal communicating hole (91) of a communicating member (9) interposed between the nozzle body (4) and the metering cylinder (6).

The spool (5) can be moved reciprocally upward and downward in the nozzle body (4) by moving a vertical up-down rod (10) connected to its upper end and protruding upward through the head part of the liquid tank (2) upward and downward by driving means such as an air cylinder (11), for example.

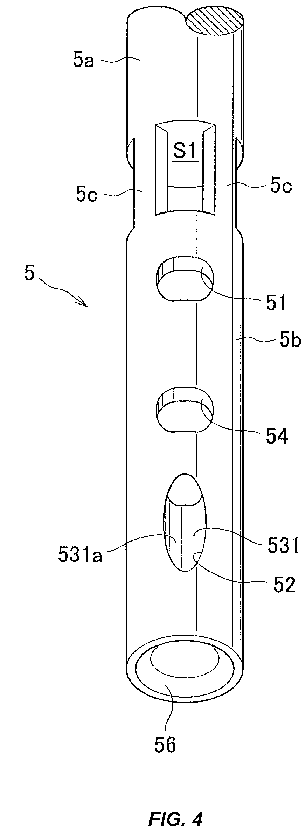

As shown in detail in Fig. 4, the spool (5) has an outer peripheral surface having a circular cross-sectional surface that can slide against the inner peripheral surface of the nozzle body (4). The spool (5) has an upper spool part (5a) and a lower spool part (5b) connected to each other via a plurality of vertical connecting shaft parts (5c). The plurality of connecting shaft parts (5c) are provided equidistantly in the circumferential direction, and a space between adjacent connecting shaft parts corresponds to a liquid distribution port (S1).

The lower spool part (5b) includes a liquid inlet port (51) formed in the outer peripheral surface at the front side of the upper end part, and a liquid discharge port (52) in the outer peripheral surface at the front side and the rear side of the lower end part. Note that the number of the liquid discharge ports (52) is not limited to two as shown in the drawing but can be one or three or more.

The spool (5) is formed in the interior thereof with a liquid distribution channel (53) extending vertically to bring these liquid inlet ports (51) and liquid discharge ports (52) into communication. The upper end of the liquid distribution channel (53) is opened in the upper end surface of the lower spool part (5b). As a result, the liquid distribution channel (53) in the lower spool part (5b) can communicate with the liquid tank (2) through the liquid distribution port (S1) between the adjacent connecting shaft parts (5c). The liquid distribution channel (53) is formed in the lower part thereof with an inclined part (531) extending obliquely downward from the center thereof toward each liquid discharge port (52). The angle of inclination of the inclined part (531), i.e., the angle of discharge of the liquid from the liquid discharge port (52), is made to be, for example, about 45 to 75° relative to the horizontal plane. The portion of the liquid distribution channel (53) excluding the inclined part (531) is made to be a vertical cylindrical shape having a circular cross-sectional surface. In other words, the liquid distribution channel (53) does not have any factor that impedes the flow of the introduced liquid, and thus has a structure not subject to pulsation. Each inclined part (531) has an inclined guide surface (531a) having a substantially circular cross-sectional area. Accordingly, the liquid discharge port (52), which is made of the lower end openings of these inclined parts (531), is made to have a substantially vertically long oval shape (see Fig. 4). However, the shape of the liquid discharge port (52) is not limited to the shape described above. The opening area of the liquid discharge port (52) is set appropriately in consideration of the type of liquid to be filled and the discharge quantity per unit time. In the case of the filling nozzle (3) of this embodiment, since the liquid discharge port (52) is formed in the outer peripheral surface of the spool (5), the opening area of the liquid discharge port (52) can be increased without increasing an outer diameter of the filling nozzle (3), as is the case, for example, with the filling nozzles described in the above-described PTLs 1 to 3, so that there is little possibility of being restricted in use in relation to the opening area of the container (C). In addition, the type of liquid to be discharged is not restricted, and for example, even liquids having a high viscosity or liquids contained solids such as pulp or fibers can be discharged from the liquid discharge port (52) of the spool (5) without hindrance.

The lower spool part (5b) includes a communicating port (54) for supplying the liquid in the liquid tank (2) to the metering cylinder (6), formed on the front side of the outer peripheral surface at a portion between the liquid inlet port (51) and the liquid discharge port (52) so as to communicate with the liquid distribution channel (53). Further, the lower spool part (5b) includes auxiliary openings (55) formed on the rear side of the outer peripheral surface at a position corresponding to the liquid inlet port (51) and the communicating port (54) so as to communicate with the liquid distribution channel (53) for maintenance such as internal washing. The auxiliary openings (55) may further be formed on the outer peripheral surface of the spool (5) on both left and right sides portions at positions about 90° rotated in the circumferential direction from the liquid inlet port (51) and the communicating port (54). However, the auxiliary openings (55) are not essential to the function and can be omitted.

The shape of the liquid inlet port (51), the communicating port (54) and the auxiliary openings (55) may have, for example, a slightly horizontally elongated substantially oval shape as illustrated in Fig. 4, as well as a circle, a square, or the like.

The lower end surface of the spool (5) is recessed upward. More specifically, as illustrated in Fig. 2 to Fig. 4, the spool (5) includes a recessed arcuate surface part (56) having a substantially trapezoidal cross-section formed on the lower end surface thereof excluding the peripheral edge part. Note that the recessed shape of the lower end surface of the spool (5) is not limited to the shape described above.

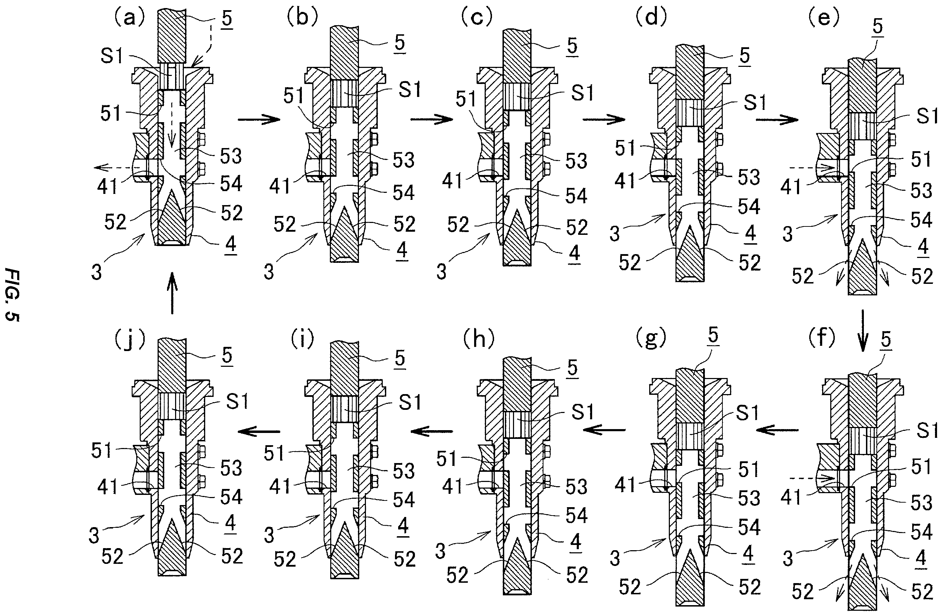

Next, referring to Fig. 5 and the like, the filling process of liquid into the container (C) by the liquid filling device (1) described above will be described in sequence.

First, in the stage before the start of liquid filling illustrated in Fig. 5(a), the spool (5) of the filling nozzle (3) is at the upper end position of the up-down stroke. In this state, the liquid distribution channel (53) in the spool (5) is in communication with the liquid tank (2) through the liquid distribution port (S1). The communicating port (54) of the spool (5) is in communication with the liquid introduction hole (41) of the nozzle body (4). The liquid inlet port (51) and the liquid discharge port (52) of the spool (5) are blocked by the inner peripheral surface of the nozzle body (4). In contrast, in the metering cylinder (6), the piston (7) is moved upward to the upper end of the up-down stroke (see Fig. 2). Then, the liquid in the liquid tank (2) is supplied to the lower part of the metering cylinder (6) through the liquid distribution port (S1) of the spool (5), the liquid distribution channel (53) and the communicating port (54), the liquid introduction hole (41) of the nozzle body (4), the communicating hole (91) of the communicating member (9), and the liquid distribution hole (61) of the metering cylinder (6).

Subsequently, when the spool (5) is moved downward to start the liquid filling, the upper spool part (5a) enters the nozzle body (4) and the liquid distribution port (S1) is gradually closed, so that the liquid distribution channel (53) is closed off from inside the liquid tank (2), as illustrated in Fig. 5(b). The liquid introduction hole (41) of the nozzle body (4) is blocked by the portion of the outer peripheral surface of the spool (5) between the liquid inlet port (51) and the liquid discharge port (52), and the liquid distribution channel (53) and the inside of the metering cylinder (6) are completely closed off (see Fig. 5(c)). In this state, the liquid discharge port (52) of the spool (5) remains blocked by the outer peripheral surface of the nozzle body (4).

When the spool (5) is further lowered, a part of the liquid discharge port (52) of the spool (5) is exposed and opened below the nozzle body (4), as illustrated in Fig. 5(d), but in this state, the liquid introduction hole (41) of the nozzle body (4) is still blocked by the outer peripheral surface of the spool (5).

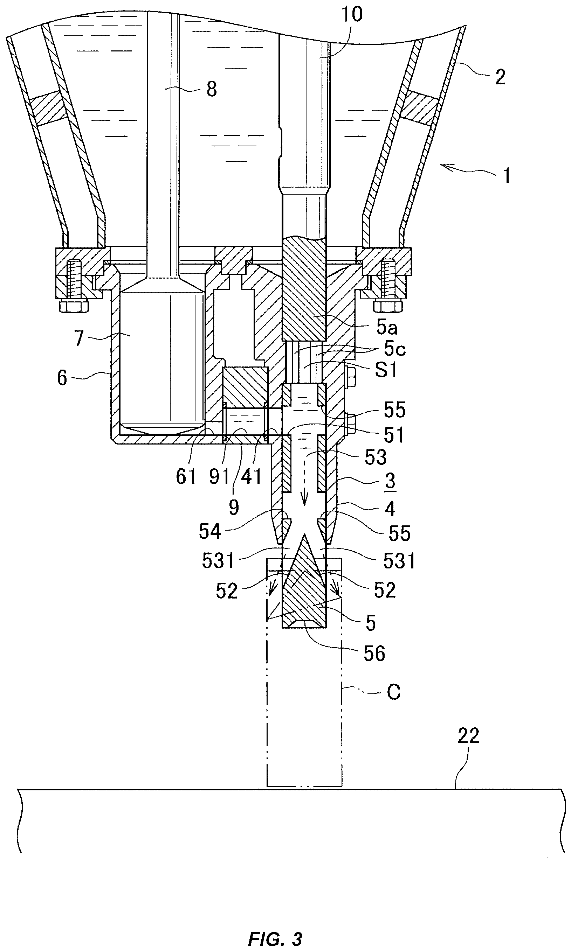

As the spool (5) descends, as illustrated in Fig. 5(e), communication between the liquid introduction hole (41) of the nozzle body (4) and the liquid inlet port (51) of the spool (5) starts, and also, in conjunction therewith, the piston (7) starts moving downward in the metering cylinder (6). Then, the liquid in the metering cylinder (6) is introduced into the liquid distribution channel (53) from the liquid introduction hole (41) of the nozzle body (4) through the liquid inlet port (51) of the spool (5) with the predetermined filling pressure added by the piston (7) and is discharged obliquely downward from each liquid discharge port (52). In this case, the spool (5) is moved downward to a position where at least a part of the liquid discharge port (52) enters the container (C), and the length between the liquid discharge port (52) and the bottom of the container (C) is shortened (see Fig. 3). The liquid discharged from the liquid discharge port (52) is usually made to flow down along the inner surface of the side wall of the container (C) and reaches the bottom of the container (C). This reduces the probability of occurrence of splashing or foaming of the discharged liquid in the container (C).

The timing at which the liquid introduction hole (41) and the liquid inlet port (51) start to be communicated may be when at least a part of the liquid discharge port (52) is opened, but preferably when 5% or more of the opening area of the liquid discharge port (52) is opened, and more preferably when 30% or more of the same is opened. Accordingly, it is effectively prevented that the liquid is vigorously ejected from a narrow opened portion of the liquid discharge port (52) and adheres to the vicinity of the opening of the container (C) or the like.

The downward movement of the spool (5) is stopped at a moment when the liquid discharge port (52) is exposed entirely downward from the nozzle body (4) and opened, and the liquid inlet port (51) reaches the position to substantially aligned with the liquid introduction hole (41) of the nozzle body (4) (see Fig. 5(f)). In this state, the liquid is continuously discharged from the liquid discharge port (52).

Subsequently, when the discharge of the liquid from the liquid discharge port (52), i.e., the filling of the liquid into the container (C) is almost completed, the spool (5) starts to move upward, and as illustrated in Fig. 5(g), the liquid introduction hole (41) of the nozzle body (4) is first gradually blocked by the outer peripheral surface of the spool (5).

Eventually, the liquid introduction hole (41) of the nozzle body (4) is completely blocked by the outer peripheral surface of the spool (5) (see Fig. 5(h)), but at this time point, the liquid discharge port (52) of the spool (5) is open so that at least a part thereof (preferably 5% or more, more preferably, 30% or more of the opening area of the liquid discharge port (52)) is exposed and opened below the nozzle body (4). Accordingly, when the spool (5) is moved upward, the liquid is prevented from splashing out vigorously from the liquid discharge port (52) with the narrowed opened portion and adhering to the vicinity of the opening of the container (C) and the like.

When the spool (5) is moved further upward, the liquid discharge port (52) of the spool (5) is also completely blocked by the inner peripheral surface of the nozzle body (4), as illustrated in Fig. 5(i) and Fig. 5(j).

Here, the discharged liquid and solids such as pulp contained therein may adhere to the peripheral portion of the liquid discharge port (52) on the outer peripheral surface of the spool (5). However, as the spool (5) is moved upward, the outer peripheral surface of the spool (5) is brought into sliding contact with the inner peripheral surface of the nozzle body (4), thereby scraping off the adhered liquid and contained solids from the outer peripheral surface of the spool (5). Discharged liquid or contained solids may also adhere to the lower end surface of the spool (5). However, since the lower end surface of the spool (5) is recessed upward, the liquid or the like can hardly stay therein. This suppresses dripping and dropping of the contained solids after the completion of liquid filling.

When the spool (5) returns to the upper end position of the up-down stroke, i.e., the position illustrated in Fig. 5(a), the piston (7) is moved upward in the metering cylinder (6), and the liquid in the liquid tank (2) is introduced into the lower part of the metering cylinder (6) to be ready for the next filling.

By repeating the above process, filling of the liquid into the container (C) in fixed quantities is efficiently performed.

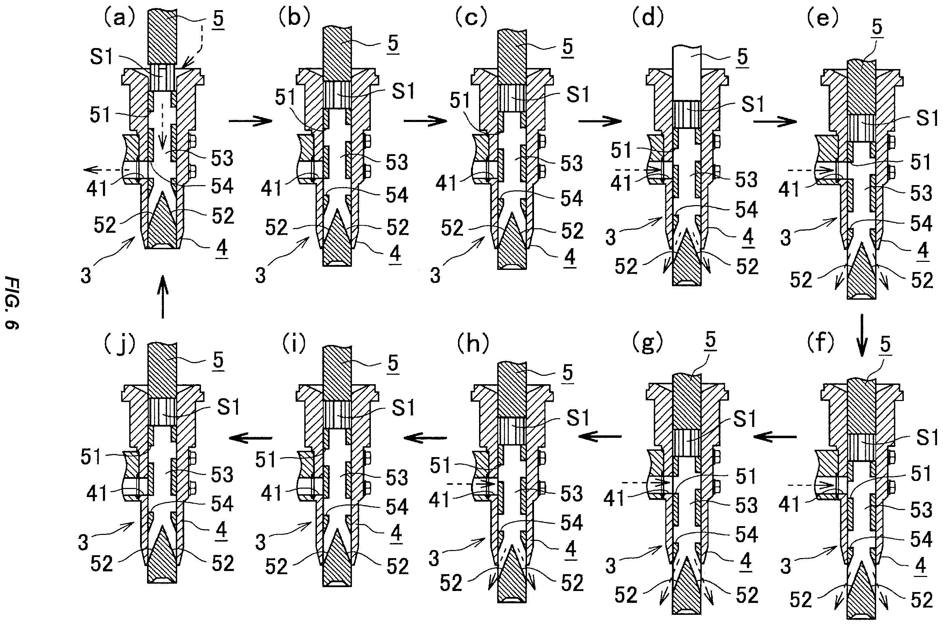

Fig. 6 shows a first modification of the liquid filling device (1) according to the first embodiment illustrated in Figs. 1 to 5.

In this modification, the liquid inlet port (51) of the spool (5) in the filling nozzle (3) is positioned slightly lower than the liquid inlet port (51) illustrated in Figs. 1 to 5.

When the spool (5) is moved downward at the time of the start of liquid filling, the liquid inlet port (51) of the spool (5) and the liquid introduction hole (41) of the nozzle body (4) start to communicate simultaneously with the start of opening of the liquid discharge port (52) of the spool (5) (see Fig. 6(c) to Fig. 6(d)). When the spool (5) is moved upward at the time of completion of liquid filling, the liquid introduction hole (41) of the nozzle body (4) is blocked by a portion of the outer peripheral surface of the spool (5) between the liquid inlet port (51) and the liquid discharge port (52) and, at the same time, the liquid discharge port (52) is blocked by the inner peripheral surface of the nozzle body (4) (see Fig. 6(h) to Fig. 6(i)).

Here, with the filling nozzle (3) of the liquid filling device (1) illustrated in Figs. 1 to 5, the following phenomena may occur when the liquid to be filled into the container (C) is of low viscosity, especially when the quantity of liquid filled into the container (C) is relatively small. In other words, with the configuration in which when the spool (5) is moved downward at the time of the start of liquid filling, the liquid inlet port (51) of the spool (5) and the liquid introduction hole (41) of the nozzle body (4) are brought into communication to allow the introduction of the liquid into the liquid distribution channel (53) in the spool (5) after the opening of the liquid discharge port (52) of the spool (5) has started, air may enter the liquid distribution channel (53) from the liquid discharge port (52) and accumulating in an upper part of the liquid distribution channel (53) in the meantime (see Fig. 5(d)). Likewise, with the configuration in which when the spool (5) is moved upward at the time of completion of liquid filling, the liquid introduction hole (41) of the nozzle body (4) is blocked by a portion of the outer peripheral surface of the spool (5) between the liquid inlet port (51) and the liquid discharge port (52) and then the liquid discharge port (52) is blocked by the inner peripheral surface of the nozzle body (4), air may enter the liquid distribution channel (53) from the liquid discharge port (52) and accumulate in an upper part of the liquid distribution channel (53) in the meantime (see Fig. 5(h)). The air staying in the upper part of the liquid distribution channel (53) is introduced together with the liquid when the piston (7) is moved upward to introduce the liquid in the liquid tank (2) into the metering cylinder (6) (see Fig. 5(a)). The introduced air is sent into the liquid distribution channel (53) of the spool (5) together with the liquid during liquid filling (see Fig. 5(e), etc.), but especially when the quantity of liquid filled into the container (C) is relatively small, a part of the air is not discharged together with the liquid from the liquid discharge port (52) but remains in the upper part of the liquid distribution channel (53) and is sent again into the metering cylinder (6). If this series of processes is repeated, air may accumulate in the metering cylinder (6), and even if the piston (7) is moved downward, it will not be possible to push out a fixed quantity of liquid because of the air compression, and eventually, the metering cylinder (6) may be filled with air, making it difficult to introduce liquid.

In contrast, in the case of the filling nozzle (3) of the first modification of the liquid filling device (1) illustrated in Fig. 6, by adjusting the position of the liquid inlet port (51) of the spool (5) as described above, when filling liquid, the timing at which the liquid discharge port (52) of the spool (5) starts to be opened and the timing at which the communication between the liquid inlet port (51) of the spool (5) and the liquid introduction hole (41) of the nozzle body (4) is started are matched, and when completing the liquid filling, the timing at which the liquid introduction hole (41) of the nozzle body (4) is blocked and the timing at which the liquid discharge port (52) of the spool (5) is blocked are matched. Therefore, even when the liquid to be filled into the container (C) is of low viscosity (and small quantity), the air is avoided from entering the liquid distribution channel (53) of the spool (5) and accumulating in the upper part thereof, so that the liquid filling device (1) can be operated continuously without hindrance.

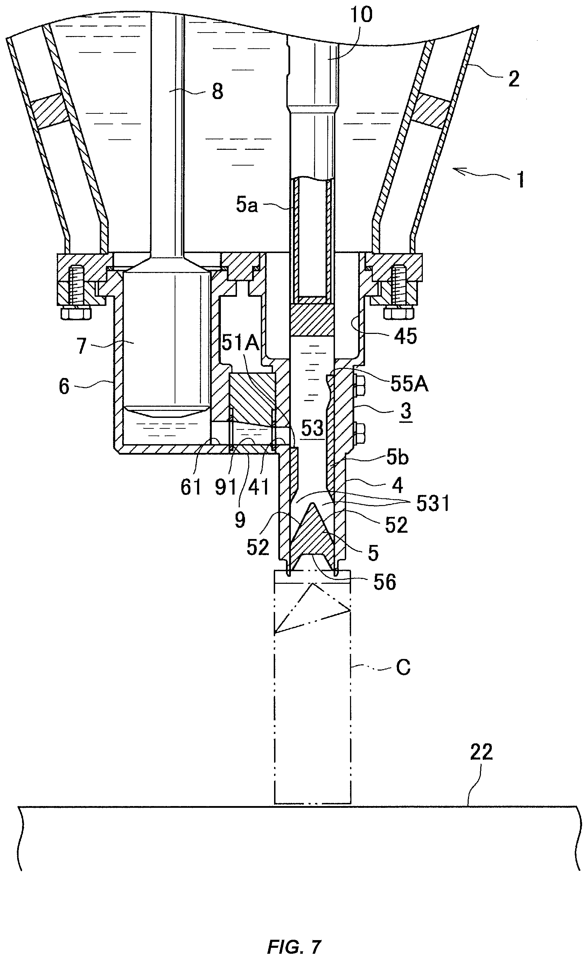

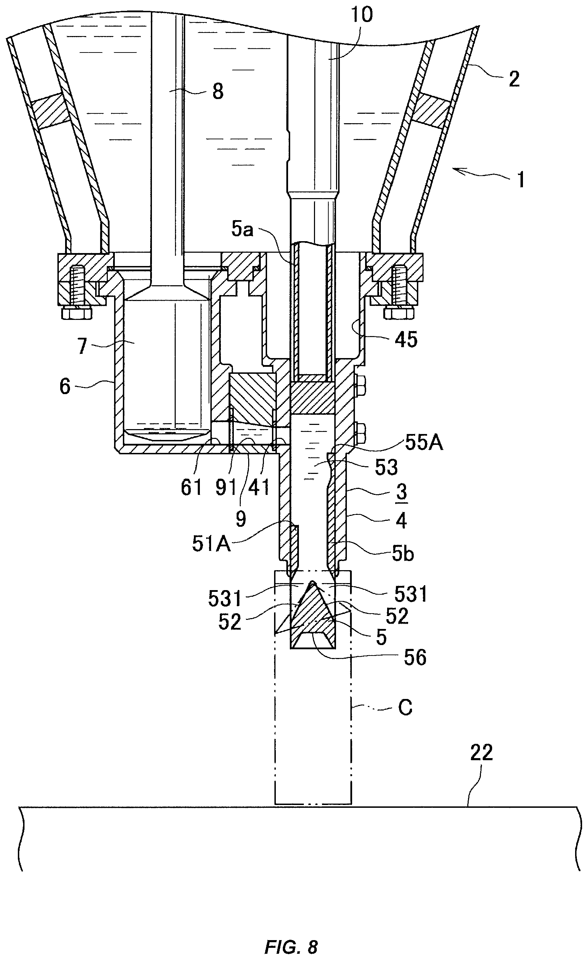

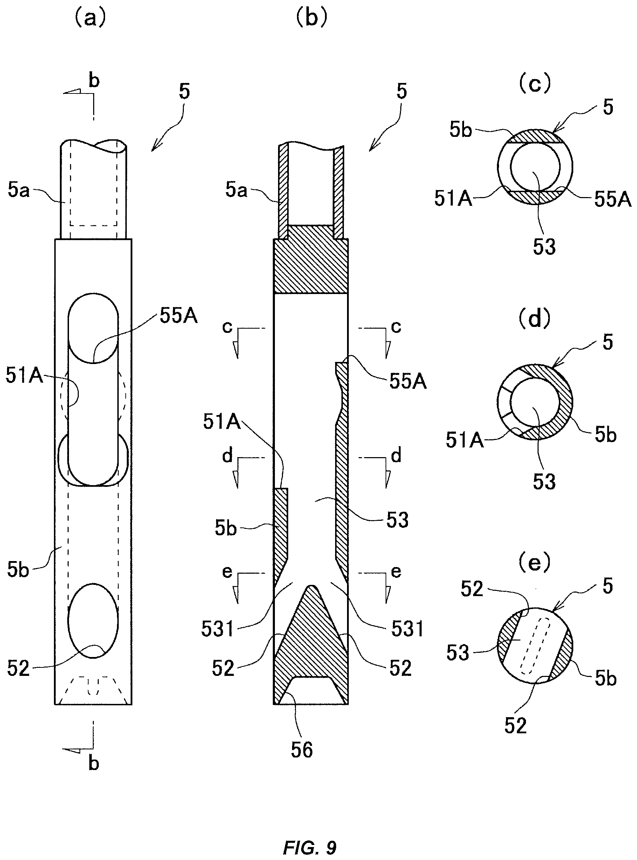

Fig. 7 to Fig. 10 illustrate a second modification of the liquid filling device (1) according to the first embodiment illustrated in Fig. 1 to Fig. 5.

In this modification, the filling nozzle (3) includes an enlarged diameter part (45) formed on an upper part of the nozzle body (4), the enlarged diameter part (45) having a larger inner diameter than the lower part. The interior of this enlarged diameter part (45) is in communication with the bottom of the liquid tank (2) and is filled with liquid.

In the spool (5), the upper spool part (5a) and the lower spool part (5b) are directly connected without the connecting shaft part.

In the upper part of the outer peripheral surface of the lower spool part (5b), a liquid distribution port (55A) is formed in the rear side to bring the liquid tank (2) and the liquid distribution channel (53) of the spool (5) into communication via an enlarged diameter part (45) of the nozzle body (4) when the spool (5) is at the upper end position of the up-down stroke.

Furthermore, in this modification of the spool (5), the liquid inlet port (51A) is made to be long vertically. Since this liquid inlet port (51A) also serves as the communicating port (54) illustrated in Fig. 1 to Fig. 5, no single communicating port is formed on the spool (5).

With the configuration described thus far, the liquid inlet port (51A) of the spool (5) and the liquid introduction hole (41) of the nozzle body (4) are configured to be in communication with a constant area (equal to the opening area of the liquid introduction hole (41)) irrespective of the position of the spool (5) in the up-down stroke.

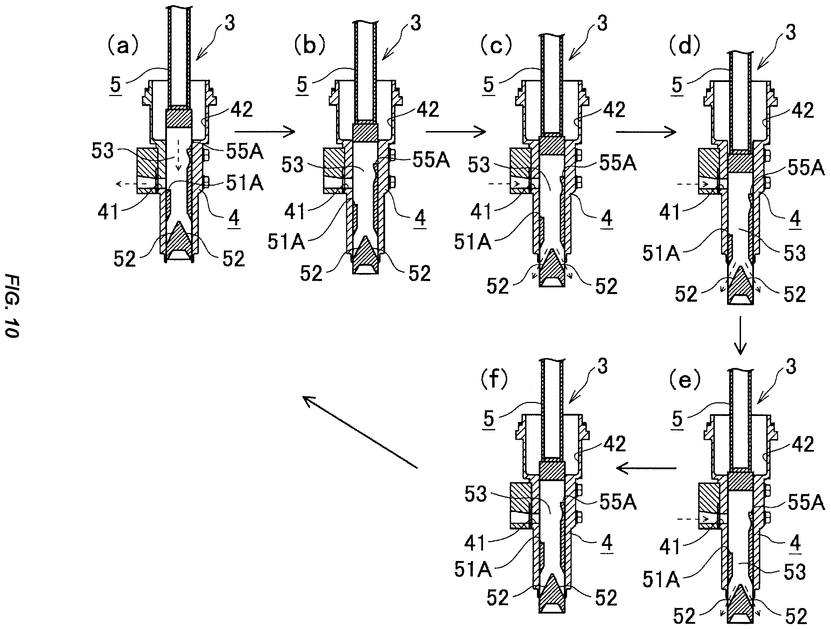

In this second modification, as illustrated in Fig. 10, when the spool (5) is moved downward at the start of liquid filling, the piston (7) starts moving downward, and at the same time as the liquid under a predetermined filling pressure starts to be introduced into the liquid distribution channel (53) through the liquid inlet port (51A) and the liquid introduction hole (41) and the liquid discharge port (52) of the spool (5) starts to be opened (see Fig. 10(b) and Fig. 10(c)). In other words, when filling liquid, the timing at which the introduction of the pressurized liquid into the liquid distribution channel (53) of the spool (5) is started by the downward movement of the piston (7) is matched with the timing at which the opening of the liquid discharge port (52) of the spool (5) is started.

When the spool (5) is moved upward at the time of completion of liquid filling, the piston (7) stops moving downward and the introduction of the pressurized liquid into the liquid distribution channel (53) is terminated and, simultaneously with the termination of the introduction, the liquid discharge port (52) is blocked by the inner peripheral surface of the nozzle body (4) (see Fig. 10(f)). In other words, when completing the liquid filling, the timing at which the introduction of the pressurized liquid into the liquid distribution channel (53) is terminated by the stop of downward movement of the piston (7) is matched with the timing at which the liquid discharge port (52) of the spool (5) is blocked.

Therefore, according to the liquid filling device (1) of the second modification illustrated in Fig. 7 to Fig. 10, in the same manner as the liquid filling device of the first modification illustrated in Fig. 6, even when the liquid to be filled into the container (C) is of low viscosity (and small quantity), the air is avoided from entering the liquid distribution channel (53) of the spool (5) and accumulating in the upper part thereof, so that the liquid filling device (1) can be operated continuously without hindrance.

Also, according to the liquid filling device (1) of the second modification, the area of the communication between the liquid inlet port (51A) of the spool (5) and the liquid introduction hole (41) of the nozzle body (4) can be made constant regardless of the position of the up-down stroke of the spool (5), so that the flow of the liquid introduced into the liquid distribution channel (53) of the spool (5) becomes constant, which facilitates adjustment during liquid filling.

### Second Embodiment

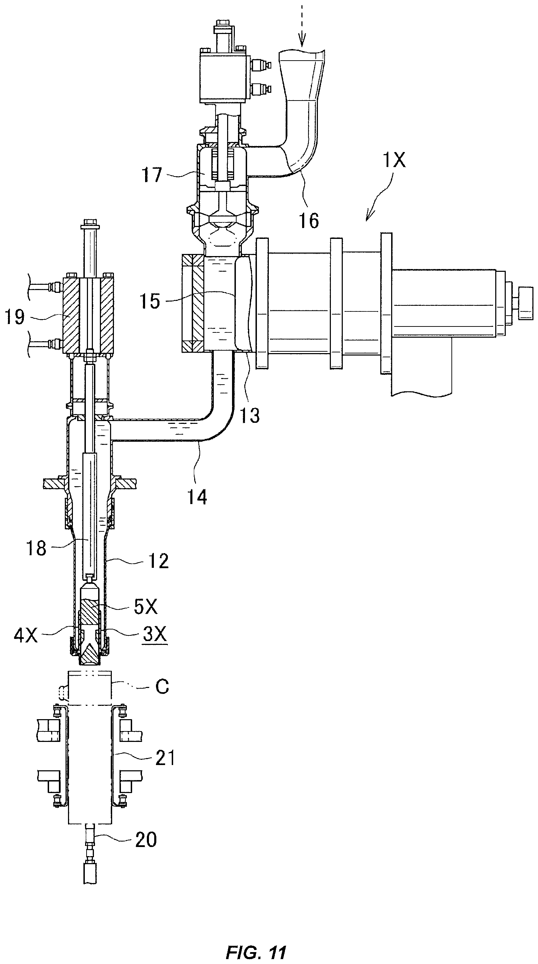

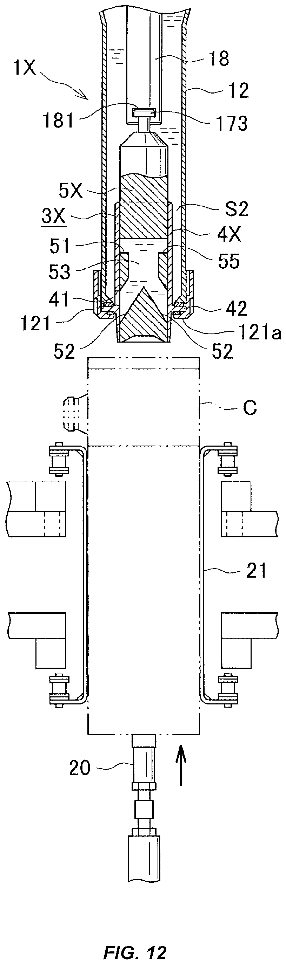

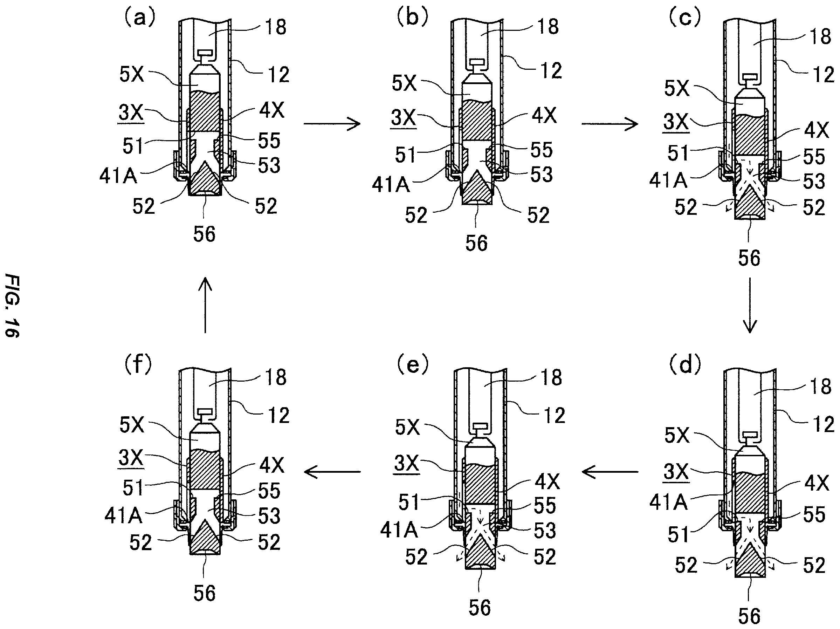

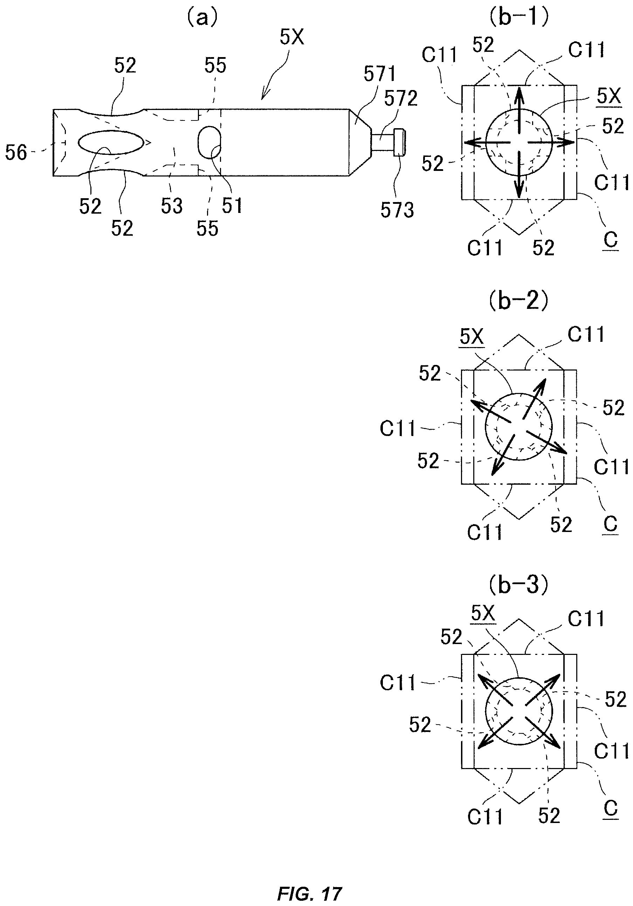

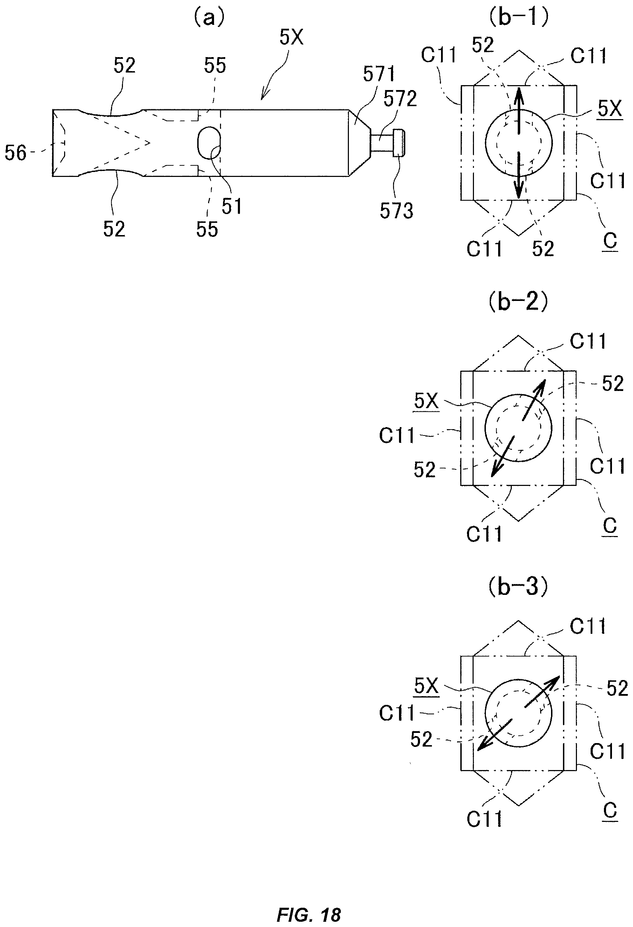

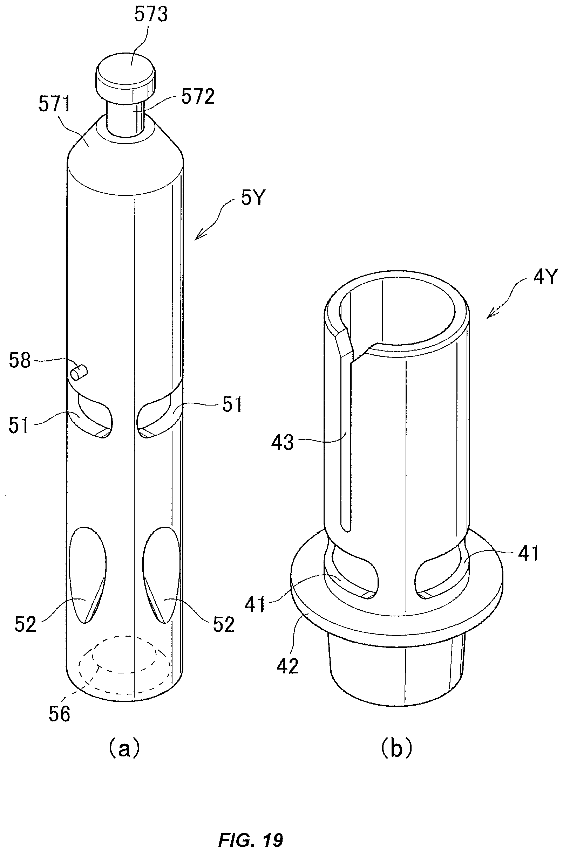

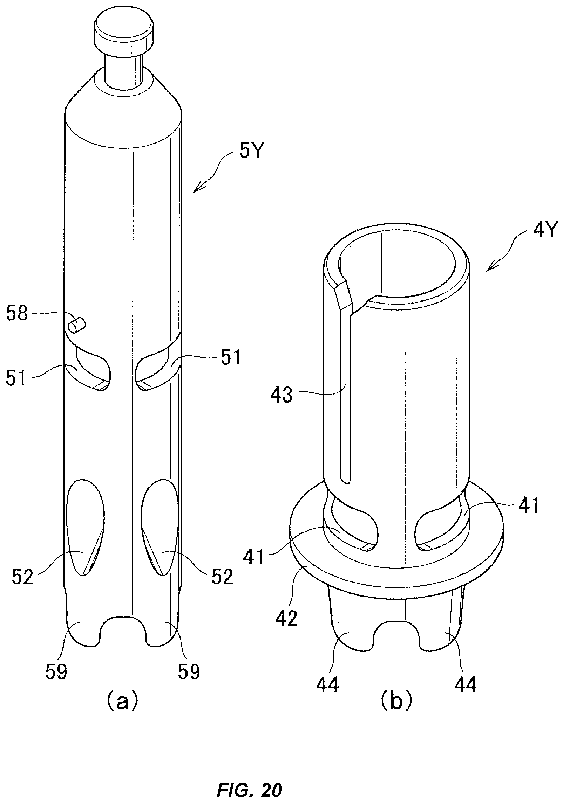

Fig. 11 illustrates a general outline of a liquid filling device according to a second embodiment of the present invention, and Fig. 12 to Fig. 15 illustrate details of the filling nozzle of the device. Fig. 16 shows a modification of the same device. Fig. 17 and Fig. 18 illustrate a mode of the direction of liquid discharged from the liquid discharge port of the filling nozzle in relation to the inner surface of the container. Fig. 19 and Fig. 20 illustrate a modification of the same filling nozzle.

In the following description, the left in Fig. 11 to Fig. 13 is referred to as "front", and the right in the same drawings is referred to as "rear".

In the following, descriptions may be omitted for configurations and effects that are substantially the same as those of the first embodiment.

As illustrated in Fig. 11, a liquid filling device (1X) of this embodiment is provided with a vertical filling tube (12), a filling nozzle (3X) provided at a lower end of the filling tube (12), a metering cylinder (13) communicated with an upper end of the filling tube (12) via a connecting tube (14) and having a piston (15) inserted therein for back and forth reciprocating movement, and a liquid supply tube (16) connected to a head part of the metering cylinder (13), and an open-close valve (17) provided inside the liquid supply tube (16). The upper end of the liquid supply tube (16) is connected to a liquid tank, which is not illustrated in the drawing.

The filling nozzle (3X) has a substantially vertical cylindrical nozzle body (4X) disposed so that the lower end faces the upper end opening of the container (C), and a substantially vertical rod-shaped spool (5X), which is inserted into the nozzle body (4X) so as to be freely slidable upward and downward. The container (C) is conveyed by a conveyor or the like while being held and guided by a guide member (21) and is stopped at a filling station directly below the filling nozzle (3X) and is moved upward by a lifter (20) during liquid filling and is moved downward by the lifter (20) as filling proceeds.

The nozzle body (4X) is concentrically arranged and fixed with a predetermined annular void (S2) in the lower end part of the filling tube (12). More specifically, the nozzle body (4X) is provided with an annular flange part (42) at a position close to the lower end of an outer peripheral surface, and the flange part (42) is brought into contact with a lower end surface of the filling tube (12). Furthermore, the nozzle body (4X) is fixed to the lower end of the filling tube (12) by screw-fitting a cylindrical female thread member (121) having an annular inner protruding part (121a) at the lower end to a male thread part at a lower end of the outer peripheral surface of the filling tube (12). Note that the fixing structure of the nozzle body (4X) is not limited to the configuration described above.

The inner peripheral surface of the nozzle body (4X) is made to have a vertical cylindrical shape having a circular cross-sectional surface.

The nozzle body (4X) includes a liquid introduction hole (41) formed through the peripheral wall part at a predetermined height position on one side (front side in the drawing) thereof. The liquid introduction hole (41) is in communication with the interior of the filling tube (12) via the annular void (S2). As illustrated in Fig. 11 to Fig. 13, the nozzle body (4X) includes only one liquid introduction hole (41) at a predetermined height position on the peripheral wall part, or a plurality of holes at intervals in the circumferential direction (see Fig. 19 and Fig. 20 below).

The spool (5X) can be moved reciprocally upward and downward in the nozzle body (4X) by moving a vertical up-down rod (18) connected to its upper end and protruding upward through the head part of the filling tube (12) upward and downward by driving means such as an air cylinder (19), for example.

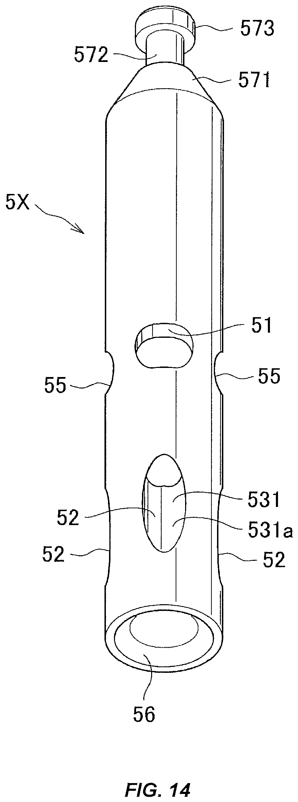

As shown in detail in Fig. 14, the spool (5X) has an outer peripheral surface having a circular cross-sectional surface that can slide against the inner peripheral surface of the nozzle body (4X). The spool (5X) has an upper part (571) having a conical shape and includes a disc-shaped head (573) formed via a small-diameter shaft part (572) extending further upward shortly from the same part (571). The head (573) of the spool (5X) is fitted into a notch (181) provided in the lower end of the up-down rod (18), so that the spool (5X) is attached to the lower end of the up-down rod (18).

The spool (5X) includes a liquid inlet port (51) formed on the outer peripheral surface on one side (front side in Fig. 11 to Fig. 13) in the middle of its height, and four liquid discharge ports (52) formed equidistantly in the circumferential direction in its lower end part. Note that the number of liquid inlet ports (51) may be two or more, depending on the number of liquid introduction holes (41) in the nozzle body (4X). Also, the number of the liquid discharge ports (52) is not limited to four as shown in the drawings but can be one or three or more.

The spool (5X) is formed in the interior thereof with a liquid distribution channel (53) extending vertically to bring these liquid inlet ports (51) and liquid discharge ports (52) into communication. The liquid distribution channel (53) has a vertical cylindrical upper portion having a circular cross-sectional surface and a lower part including an inclined part (531) which branches off from the lower end of the cylindrical upper portion and extends obliquely downward toward each liquid discharge port (52). Each inclined part (531) has an inclined guide surface (531a) having a substantially circular cross-sectional area. Accordingly, the liquid discharge port (52), which is made of the lower end openings of these inclined parts (531), is made to have a substantially vertically long oval shape (see Fig. 14).

Furthermore, the spool (5X) includes auxiliary openings (55) formed in the outer peripheral surface at a position on the opposite side (rear side in Fig. 11 to Fig. 13) from the liquid inlet port (51) so as to be in communication with the liquid distribution channel (53) for maintenance such as internal cleaning. The auxiliary openings (55) may also be formed in the outer peripheral surface of the spool (5X) at positions rotated 90° in both directions (left and right in Fig. 11 to Fig. 13) from the liquid inlet port (51). However, the auxiliary openings (55) are not essential to the function and can be omitted. In the case where a plurality of liquid introduction holes (41) are formed in the nozzle body (4X), some or all of the above auxiliary openings (55) may be made as liquid inlet ports (51) formed at positions corresponding to the liquid introduction holes (41).

The shape of the liquid inlet port (51) and the auxiliary openings (55) may be, for example, a slightly horizontally elongated substantially oval shape as illustrated in Fig. 14, as well as a circle, a square, or the like.

The lower end surface of the spool (5X) is recessed upward. More specifically, as illustrated in Fig. 14, etc., a recessed arcuate surface (56) having a substantially trapezoidal cross-section is formed on the lower end surface of the spool (5X), excluding the outer peripheral edge part.

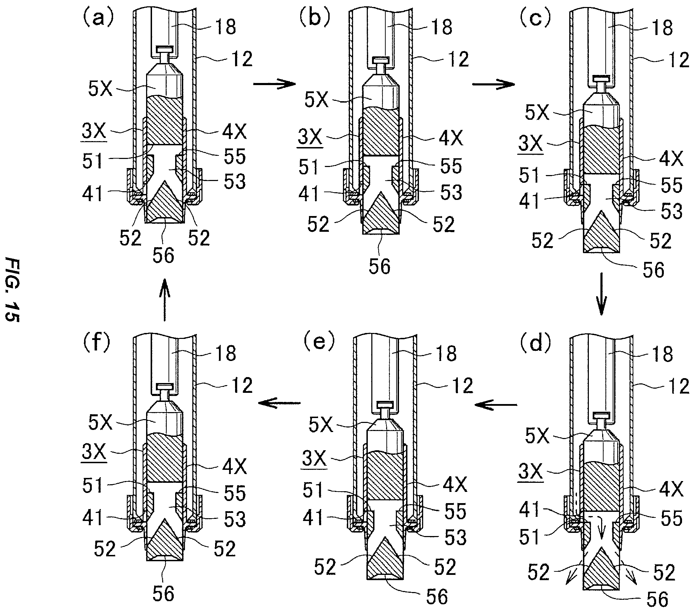

Next, referring to Fig. 15 and the like, the filling process of liquid into the container (C) by the liquid filling device (1X) described above will be described in sequence.

First, in the stage before the start of liquid filling illustrated in Fig. 15(a), the spool (5X) of the filling nozzle (3X) is at the upper end position of the up-down stroke. In this state, the liquid distribution channel (53) in the spool (5X) is in communication with the interior of the filling tube (12) through the liquid introduction hole (41) of the nozzle body (4X) and the liquid discharge port (52) of one of the spools (5X) (front side in Fig. 11 to Fig. 13) facing the hole (41). The liquid inlet port (51) and remaining liquid discharge port (52) of the spool (5X) are blocked by the inner peripheral surface of the nozzle body (4X). In contrast, in the metering cylinder (13), the piston (15) is at a front end position of a fore-and-aft movement stroke and the open-close valve (17) in the liquid supply tube (16) is closed (see Fig. 11). The inside of the liquid supply tube (16), the metering cylinder (13), the connecting tube (14), and the filling tube (12), as well as the liquid distribution channel (53) in the spool (5X), are filled with liquid.

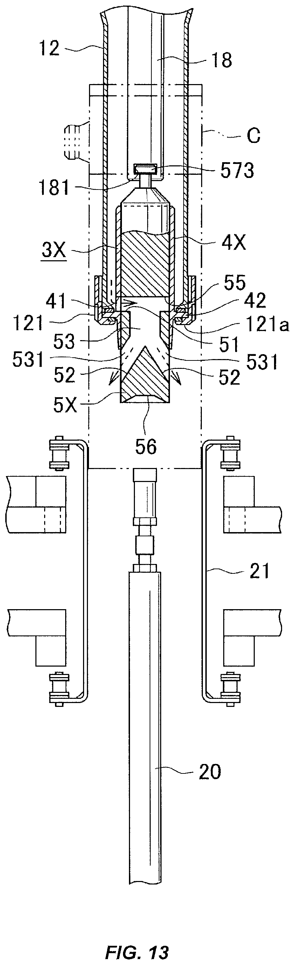

When the spool (5X) is moved downward for starting liquid filling, the liquid introduction hole (41) of the nozzle body (4X) is blocked by the portion of the outer peripheral surface of the spool (5X) between the liquid inlet port (51) and the liquid discharge port (52), and the liquid distribution channel (53) and the inside of the filling tube (12) are completely closed off as illustrated in Fig. 15(b). In this state, the liquid discharge port (52) of the spool (5X) remains blocked by the outer peripheral surface of the nozzle body (4X). In conjunction with this, the container (C) is moved upward by the lifter (20), and the lower part of the filling nozzle (3X) and the filling tube (12) enters the inside of the container (C) (see Fig. 13).

When the spool (5X) is moved further downward, a part of the liquid discharge port (52) of the spool (5X) is exposed and opened below the nozzle body (4X), and a small quantity of liquid accumulated in the liquid distribution channel (53) flows out as illustrated in Fig. 15(c), but in this state, the liquid introduction hole (41) of the nozzle body (4X) is still blocked by the outer peripheral surface of the spool (5X).

As the spool (5X) is moved downward, the liquid introduction hole (41) of the nozzle body (4X) and the liquid inlet port (51) of the spool (5X) are communicated. In conjunction with this movement of the spool, the open-close valve (17) in the liquid supply tube (16) is opened first, and then the piston (15) in the metering cylinder (13) is immediately moved backward, so that liquid is drawn into the metering cylinder (13). At the moment when the piston (15) comes to the rear end position of the fore-and-aft movement stroke and a fixed quantity of liquid is drawn in, the open-close valve (17) is closed, and then the piston (15) is immediately pushed forward. Then, as illustrated in Fig. 15(d), the liquid in the filling tube (12) is introduced into the liquid distribution channel (53) from the liquid introduction hole (41) of the nozzle body (4X) through the liquid inlet port (51) of the spool (5X) with the predetermined filling pressure added by the piston (15) and is discharged obliquely downward from each liquid discharge port (52). In this case, the portion of the spool (5X) exposed downward, including the liquid discharge port (52), is entirely entered the container (C), and the length between the liquid discharge port (52) and the bottom of the container (C) is noticeably short (See Fig. 13). The liquid discharged from the liquid discharge port (52) is usually made to flow down along the inner surface of the side wall of the container (C) and reaches the bottom of the container (C). When the discharge of the liquid from the liquid discharge port (52) starts, the container (C) is gradually moved downward by the lifter (20) as the liquid level of the filled liquid rises. The mode of discharging the liquid as described above highly effectively prevents the discharged liquid from splashing or foaming in the container (C).

Note that the timing at which the liquid introduction hole (41) and the liquid inlet port (51) start to be communicated corresponds to the timing when at least part of the liquid discharge port (52) (preferably when 5% or more, more preferably 30% or more of the opening area of the liquid discharge port (52)) is opened. Accordingly, it is effectively prevented that the liquid is vigorously ejected from a narrow opened portion of the liquid discharge port (52) and adheres to the vicinity of the opening of the container (C) or the like.

The downward movement of the spool (5X) is stopped at a moment when the liquid discharge port (52) is exposed entirely downward from the nozzle body (4X) and opened, and the liquid inlet port (51) reaches the position to substantially aligned with the liquid introduction hole (41) of the nozzle body (4X). In this state, the liquid is continuously discharged from the liquid discharge port (52).

Subsequently, when the discharge of the liquid from the liquid discharge port (52), i.e., the filling of the liquid into the container (C) is almost completed, the spool (5X) starts to move upward, and as illustrated in Fig. 15(e), the liquid introduction hole (41) of the nozzle body (4X) is first blocked by the outer peripheral surface of the spool (5X). At this point, the liquid discharge port (52) of the spool (5X) is open so that at least a part thereof (preferably 5% or more, more preferably, 30% or more of the opening area of the liquid discharge port (52)) is exposed below the nozzle body (4X). Accordingly, when the spool (5X) is moved upward, the liquid is prevented from splashing out vigorously from the liquid discharge port (52) with narrowed opened portion and adhering to the vicinity of the opening of the container (C) and the like.

When the spool (5X) is moved further upward, the liquid discharge port (52) of the spool (5X) is also completely blocked by the inner peripheral surface of the nozzle body (4X), as illustrated in Fig. 15(f).

When the spool (5X) returns to the upper end position of the up-down stroke, i.e., the position illustrated in Fig. 15(a), the piston (15) in the metering cylinder (13) returns to a front end position of the fore-and-aft movement stroke to be ready for the next filling.

By repeating the above process, filling of the liquid into the container (C) in fixed quantities is efficiently performed.

Fig. 16 illustrates a modification of the liquid filling device (1X) according to the second embodiment illustrated in Fig. 11 to Fig. 15.

In the case of the liquid filling device shown in the drawing, the liquid introduction hole (41A) of the nozzle body (4X) is made to be long vertically. Accordingly, the liquid inlet port (51) of the spool (5X) and the liquid introduction hole (41A) of the nozzle body (4X) are configured to be in communication with a constant area (equal area to the opening area of the liquid inlet port (51)) irrespective of the position of the spool (5A) in the up-down stroke.

In this modification, when the spool (5X) is moved downward at the start of liquid filling, the piston (15) starts moving forward (in direction of liquid pressurization), and at the same time as the liquid under a predetermined filling pressure starts to be introduced into the liquid distribution channel (53) through the liquid inlet port (51) and the liquid introduction hole (41A) and the liquid discharge port (52) of the spool (5X) starts to be opened (see Fig. 16(c)). In other words, when filling liquid, the timing at which the introduction of the pressurized liquid into the liquid distribution channel (53) of the spool (5X) is started by the forward movement of the piston (15) is matched with the timing at which the opening of the liquid discharge port (52) of the spool (5X) is started.

When the spool (5X) is moved upward at the time of completion of liquid filling, the piston (15) stops moving forward (in the direction of liquid pressurization), and the liquid discharge port (52) is blocked by the inner peripheral surface of the nozzle body (4X) simultaneously with the termination of the introduction of the pressurized liquid into the liquid distribution channel (53) (see Fig. 10(f)). In other words, when completing the liquid filling, the timing at which the introduction of the pressurized liquid into the liquid distribution channel (53) is terminated by the stop of forward movement of the piston (15) is matched with the timing at which the liquid discharge port (52) of the spool (5X) is blocked.

Therefore, according to the modification illustrated in Fig. 16, even when the liquid to be filled into the container (C) is of low viscosity, the air is avoided from entering the liquid distribution channel (53) of the spool (5X) and accumulating in the upper part thereof, so that the liquid filling device (1X) can be operated continuously without hindrance.

Also, according to the liquid filling device (1X) of the modification, the area of the communication between the liquid inlet port (51) of the spool (5X) and the liquid introduction hole (41A) of the nozzle body (4X) can be made constant regardless of the position of the up-down stroke of the spool (5X), so that the flow of the liquid introduced into the liquid distribution channel (53) of the spool (5X) becomes constant, which facilitates adjustment during liquid filling.

Next, referring to Fig. 17, the mode of a suitable direction of liquid discharged from the liquid discharge port (52) of the spool (5X) with respect to the inner surface of the container (C) in the case of filling liquid into the container (C) having a square cross-sectional surface by the above-mentioned filling nozzle (3X) will be described.

As illustrated in Fig. 17(a), four liquid discharge ports (52) are formed on the outer peripheral surface of the spool (5X) equidistantly in the circumferential direction.

First, as illustrated in Fig. 17(b-1), when liquid is discharged from the four liquid discharge ports (52) of the spool (5X) in a direction forming a right angle with the inner surface of each of four sidewalls (C11) of the container (C) toward the widthwise center part of the inner surface of each of the sidewalls (C11), the liquid flowing down along the inner surface of the sidewalls (C11) may collide at the bottom of the container (C), thereby causing splashing or foaming.

Also, as illustrated in Fig. 17(b-3), when the liquid is discharged from the four liquid discharge ports (52) of the spool (5X) toward the four corners formed by the inner surfaces of the adjacent sidewalls (C11) of the container (C) as well, the liquid flowing down along each of the inside corners may collide at the bottom of the container (C), thereby causing splashing or foaming.

In contrast, as illustrated in Fig. 17(b-2), when liquid is discharged from the four liquid discharge ports (52) of the spool (5X) toward the portions between the widthwise center part and the inside corners of the inner surfaces of the four sidewalls (C11) of the container (C) obliquely with respect to the inner surface of the four sidewalls (C11), the liquid flowing down along the inner surfaces of the each of the sidewalls (C11) is avoided from colliding at the bottom of the container (C), thereby hardly causing splashing or foaming.

Fig. 18 illustrates three modes of the direction of liquid discharged from the liquid discharge port (52) with respect to the inner surface of the container (C) having a square cross-sectional surface in the case where a spool (5X) having two liquid discharge ports (52) facing in an opposite direction from each other on the outer periphery is used.

First, as illustrated in Fig. 18(b-1), when liquid is discharged from the two liquid discharge ports (52) of the spool (5X) in the direction forming a right angle with the inner surfaces of the sidewalls (C11) of the container (C) toward the widthwise center part of the inner surface of the opposing two sidewalls (C11), the liquid flowing down along the inner surface of the sidewalls (C11) may collide at the bottom of the container (C), thereby causing splashing or foaming.

Also, as illustrated in Fig. 18(b-3), when the liquid is discharged from the two liquid discharge ports (52) of the spool (5X) toward the two inside corners located at diagonal positions of the container (C) as well, the liquid flowing down along each of the inside corners may collide at the bottom of the container (C), thereby causing splashing or foaming.

In contrast, as illustrated in Fig. 18(b-2), when the liquid is discharged from the two liquid discharge ports (52) of the spool (5X) in directions oblique with respect to the inner surfaces of the sidewalls (C11) toward the portions between the widthwise center part and the inside corners of the inner surface of each of the two opposing sidewalls (C11) of the container (C), liquid flowing down along the inner surface of each of the sidewalls (C11) is avoided from colliding at the bottom of the container (C), thereby splashing and foaming are hardly generated.

As is apparent from the foregoing, when filling the container (C) having a square cross-sectional surface with liquid, it is preferable that the spool (5X) having four or two liquid discharge ports (52) formed on the outer peripheral surface equidistantly in the circumferential direction is used, and the direction of the spool (5X) is adjusted so that the liquid is discharged from these liquid discharge ports (52) in an oblique direction in plan view toward the inner surfaces of the four sidewalls (C11) or the inner surfaces of the two opposite sidewalls (C11) in the container (C), thereby effectively suppressing splashing and foaming in the container (C).

Although the illustration is omitted, when filling a container having a circular cross-sectional surface with liquid, if a spool having three liquid discharge ports formed equidistantly in the circumferential direction on the outer peripheral surface is used to discharge liquid from these liquid discharge ports toward the inner surface of the peripheral wall of the container, a probability that the liquid discharged from each liquid discharge port collides at the bottom of the container is reduced, thereby suppressing splashing and foaming in the container.

Fig. 19 illustrates a modification of the filling nozzle described above.

In the case of the filling nozzle illustrated in the drawing, a plurality (e.g., three) of liquid introduction holes (41), which consist of oval holes elongated in the horizontal direction, are formed equidistantly in the circumferential direction at the middle height of the peripheral wall part of a nozzle body (4Y), and a plurality (e.g., three) of liquid inlet ports (51), which consist of oval holes elongated in the horizontal direction, are formed equidistantly in the circumferential direction on the outer peripheral surface of a spool (5Y) corresponding to these liquid inlet ports (41).

On the outer peripheral surface of the spool (5Y), a liquid discharge port (52) is formed at each of the lower positions of the plurality of liquid inlet ports (51). Each liquid discharge port (52) has a substantially inverted teardrop shape gradually decreasing in horizontal width of the lower part thereof as it goes downward. Therefore, when the liquid to be filled contains solids such as pulp and fibers as well, when the spool (5Y) is moved upward after the completion of liquid filling, the solids gather near the lower end of the liquid discharge port (52) of the spool (5Y) and can be drained easily, thereby preventing the solids from being caught between the nozzle body (4Y) and the spool (5Y). Note that the shape of each liquid discharge port (52) may have an inverted teardrop shape as illustrated in the drawing, or a rhomboid shape, for example.

The spool (5Y) includes an outward protrusion (58) formed on the outer peripheral surface at a position above the liquid inlet port (51). The nozzle body (4Y) also includes a slit (43) formed on the peripheral wall part so as to extend vertically downward from the upper end thereof to a position above the liquid introduction hole (41). As the spool (5Y) is moved upward and downward, the outward protrusion (58) of the spool (5Y) is caused to slide in the slit (43) of the nozzle body (4Y) in the vertical direction, thereby positioning the spool (5Y) in the circumferential direction with respect to the nozzle body (4Y).

Fig. 20 illustrates another modification of the filling nozzle described above.

The filling nozzle illustrated in the drawing has the following configuration in addition to the configuration of the filling nozzle illustrated in Fig. 19.

In other words, the spool (5Y) includes a downwardly protruding part (59) formed at the lower end so as to extend downwardly from a portion of an outer peripheral surface part located below each liquid discharge port (52). Each downwardly protruding part (59) has, for example, a substantially downwardly protruding arcuate shape.

The nozzle body (4Y) also includes a downwardly protruding part (44) formed at the lower end thereof so as to extend downwardly from a portion of the outer peripheral surface corresponding to the liquid discharge port (52) of the spool (5Y), that is, a portion of an outer peripheral surface part located below each liquid introduction hole (41). Each downwardly protruding part (44) is made in the same manner as the downward protruding part (59) of the spool (5Y), for example, in a substantially downwardly protruding arcuate shape.

According to the filling nozzle as described above, even when filling the container (C) with a high-viscosity liquid for example, the liquid discharged from the liquid discharge port (52) of the spool (5Y) and adhering to the lower end part of the outer peripheral surface of the spool (5Y) can easily gather at the distal end portions of the downwardly protruding parts (59) (44) formed at the lower end of the spool (5Y) and at the lower end of the nozzle body (4Y). Therefore, when the spool (5Y) moves upward and is housed in the nozzle body (4Y) after the completion of liquid filling, the liquid adhering to the outer peripheral surface of the spool (5Y) is almost completely drained, thereby suppressing dripping effectively.

The downwardly protruding part may be formed on only one of the lower end of the spool (5Y) and the lower end of the nozzle body (4Y).

The filling nozzle of the present invention is applicable to the liquid filling device described in the above embodiments and is equally applicable to a liquid filling device without a cylinder and a piston using, for example, an electromagnetic flowmeter.

### Industrial Applicability

The present invention is suitable for use as a filling nozzle for discharging liquid into the container in the liquid filling device used for filling a container with a fixed quantity of liquid.

### Reference Signs List

(1) (1X): liquid filling device
(3) (3X): filling nozzle
(4) (4X) (4Y): nozzle body
(41) (41A): liquid introduction hole
(44): downwardly protruding part
(5) (5X) (5Y): spool
(51) (51A): liquid inlet port
(52): liquid discharge port
(53): liquid distribution channel
(531): inclined part
(56): recessed arcuate surface part
(59): downwardly protruding part
(C): container
(C11): side wall

## Claims

1. A filling nozzle of a liquid filling device comprising:
a substantially vertical cylindrical nozzle body provided at a lower part of the liquid filling device with a lower end facing an opening of a container; and a substantially vertical rod-shaped spool inserted into the nozzle body so as to be freely slidable upward and downward,
the spool including a liquid inlet port and a liquid discharge port on an outer peripheral surface, the liquid discharge port formed at a position lower than the liquid inlet port, the spool including, in an interior thereof, a liquid distribution channel that communicates the liquid inlet port and the liquid discharge port,
the nozzle body including a liquid introduction hole formed through a predetermined height position to introduce liquid under a predetermined filling pressure, and
the spool being moved downward during liquid filling to a position in which the liquid inlet port communicates with the liquid introduction hole of the nozzle body, and the liquid discharge port being exposed downward from the nozzle body and opened, and being moved upward at a time of completion of liquid filling to a position in which the liquid discharge port is blocked by an inner peripheral surface of the nozzle body.

2. The filling nozzle of the liquid filling device according to Claim 1, wherein when the spool is moved upward at the time of completion of liquid filling, the liquid introduction hole of the nozzle body is blocked by a portion of the outer peripheral surface of the spool between the liquid inlet port and the liquid discharge port and then the liquid discharge port is blocked by the inner peripheral surface of the nozzle body.

3. The filling nozzle of the liquid filling device according to Claim 1 or 2, wherein when the spool is moved downward at a time of the start of liquid filling, at least part of the liquid discharge port of the spool is exposed downward from the nozzle body and opened, and then the liquid inlet port of the spool and the liquid introduction hole of the nozzle body are brought into communication.

4. The filling nozzle of the liquid filling device according to Claim 3, wherein when the spool is moved downward at the time of the start of liquid filling, at least 5% of an opening area of the liquid discharge port of the spool is exposed downward from the nozzle body and opened, and then the liquid inlet port of the spool and the liquid introduction hole of the nozzle body are brought into communication.

5. The filling nozzle of the liquid filling device according to Claim 1, wherein when the spool is moved downward at the time of the start of liquid filling, the liquid inlet port of the spool and the liquid introduction hole of the nozzle body start to communicate simultaneously with the start of opening of the liquid discharge port of the spool, and
when the spool is moved upward at the time of completion of liquid filling, the liquid introduction hole of the nozzle body is blocked by a portion of the outer peripheral surface of the spool between the liquid inlet port and the liquid discharge port and, at the same time, the liquid discharge port is blocked by the inner peripheral surface of the nozzle body.

6. The filling nozzle of the liquid filling device according to Claim 1, wherein the liquid inlet port of the spool and the liquid introduction hole of the nozzle body are formed to communicate with each other in a constant area irrespective of the position of the spool in the up-down stroke,
when the spool is moved downward at the time of the start of liquid filling, the liquid discharge port of the spool starts to open at the same time with the introduction of liquid under a predetermined filling pressure into a liquid distribution channel through the liquid inlet port and the liquid introduction hole starts, and
when the spool is moved upward at the time of completion of liquid filling, the liquid discharge port is blocked by the inner peripheral surface of the nozzle body simultaneously with the termination of the introduction of the liquid into the liquid distribution channel.

7. The filling nozzle of the liquid filling device according to any one of Claims 1 to 6, wherein the liquid distribution channel of the spool has an inclined part extending obliquely downward toward the liquid discharge port.

8. The filling nozzle of the liquid filling device according to any one of Claims 1 to 7, wherein four or two liquid discharge ports for discharging liquid obliquely when viewed from a plane toward inner surfaces of the four sidewalls or inner surfaces of two opposing sidewalls of a container having a square cross-sectional surface are formed equidistantly in the circumferential direction on an outer peripheral surface of the spool.

9. The filling nozzle of the liquid filling device according to any one of Claims 1 to 7, wherein three liquid discharge ports for discharging liquid toward the inner surface of the peripheral wall of the container having a circular cross-sectional surface are formed equidistantly in the circumferential direction on the outer peripheral surface of the spool.

10. The filling nozzle of the liquid filling device according to any one of Claims 1 to 9, wherein the spool is moved downward to a position at which at least part of the liquid discharge port exposed downward from the nozzle body and opened enters the container during liquid filling.

11. The filling nozzle of the liquid filling device according to any one of Claims 1 to 10, wherein the liquid discharge port of the spool has a shape such that a horizontal width of the lower part thereof gradually decreases downwardly.

12. The filling nozzle of the liquid filling device according to any one of Claims 1 to 11, wherein a lower end surface of the spool is recessed upwardly.

13. The filling nozzle of the liquid filling device according to any one of Claims 1 to 12, wherein a lower end of the spool has a downwardly protruding part extending downwardly from around an outer peripheral surface part located below the liquid discharge port.

14. The filling nozzle of the liquid filling device according to any one of Claims 1 to 13, wherein a lower end of the nozzle body has the downwardly protruding part extending downwardly from around the outer peripheral surface part corresponding to the liquid discharge port of the spool.
